# FASCICULE DE BREVET EUROPEEN

(11) **EP 3 230 564 B1**
(45) Date de publication et mention de la délivrance du brevet: **02.01.2019**
(21) Numéro de dépôt: 15804173.1
(22) Date de dépôt: 19.11.2015
(51) Int. Cl.: F01N 3/08, F01N 3/10, F01N 3/20, F01N 3/28, F01N 3/021, F01N 3/035, F01N 13/00

(54) **DISPOSITIF DE POST-TRAITEMENT DES GAZ D'ECHAPPEMENT D'UN MOTEUR A COMBUSTION**
ABGASNACHBEHANDLUNGSSYSTEM FÜR EINEN VERBRENNUNGSMOTOR
EXHAUST GAS AFTERTREATMENT DEVICE FOR INTERNAL COMBUSTION ENGINE

(30) Priorité: 10.12.2014 FR 1462168
(43) Date de publication de la demande: 18.10.2017
(73) Titulaire: PSA Automobiles SA, 78300 Poissy (FR)
(72) Inventeur: MATTHESS, Nils, 92300 Levallois Perret (FR); BERTIN, Thierry, 92250 La Garenne Colombes (FR); GENIES, Jean Florent, 78100 St Germain en Laye (FR); LE TALLEC, Thomas, 92800 Puteaux (FR)
(74) Mandataire: Bourguignon, Eric Pascal Jean
(86) Numéro de dépôt international: PCT/FR2015/053128
(87) Numéro de publication internationale: WO 2016/092170

(56) Documents cités:
- EP-A1- 2 290 204
- EP-A1- 2 500 538
- EP-A1- 2 522 822
- EP-A1- 2 590 730
- WO-A1-2010/108083
- WO-A1-2012/110720
- DE-A1-102011 079 785
- DE-A1-102011 111 590
- FR-A1- 2 955 612
- JP-A- 2013 199 913
- US-A1- 2011 138 776

## Description

L'invention est relative à des moyens de traitement des polluants des gaz d'échappement des moteurs à combustion.

Les émissions polluantes des moteurs à combustion équipant les véhicules automobiles sont réglementées par des normes. Les polluants réglementés sont, selon la technologie de moteur à combustion considérée, le monoxyde de carbone (CO), les hydrocarbures imbrûlés (HC), les oxydes d'azotes (NOx, c'est-à-dire NO et NO₂ et les particules (PM), qui sont formés lors de la combustion du carburant dans la chambre de combustion puis émis à l'échappement.

Il est connu d'employer un certain nombre de moyens de dépollution dans la ligne d'échappement des moteurs à combustion pour en limiter les émissions de polluants réglementés. Un catalyseur d'oxydation permet le traitement du monoxyde de carbone, des hydrocarbures imbrûlés, et dans certaines conditions des oxydes d'azote ; un filtre à particules peut être employé pour le traitement des particules de suie.

On désigne de manière générale ce type de dispositif par le terme de dispositif de « post-traitement » des gaz d'échappement.

Pour satisfaire aux normes anti-pollution sur les émissions d'oxydes d'azote (NOx), un système spécifique de post-traitement peut être introduit dans la ligne d'échappement des véhicules, notamment des véhicules équipés de moteurs Diesel. Pour le traitement des oxydes d'azote (NOx), on connaît des technologies de réduction catalytique sélective, ou « SCR » pour « Selective Catalytic Réduction » en anglais, qui consistent à réduire les NOx par introduction d'un agent réducteur (ou d'un précurseur d'un tel agent réducteur) dans les gaz d'échappement par réactions catalysées. Il peut par exemple s'agir d'une solution d'urée, dont la décomposition va permettre l'obtention d'ammoniac qui servira d'agent réducteur, mais également d'un réducteur ou d'un précurseur d'un tel réducteur sous forme gazeuse. On parlera dans la suite du présent document d'une manière générale de « réducteur » pour désigner un agent réducteur ou un précurseur d'agent réducteur.

L'agent réducteur généré permet de réduire les oxydes d'azotes par réaction dans un catalyseur SCR, c'est-à-dire un substrat portant une imprégnation catalytique apte à favoriser la réduction des NOx par l'agent réducteur.

Les normes européennes, notamment, tendent à devenir de plus en plus sévères. Et les solutions pour réduire les émissions de polluants en sortie de ligne d'échappement pour respecter les normes actuelles se révèleront insuffisantes au vu des évolutions de normes prévues au-delà de 2017.

En effet, la première étape de la norme, Euro 6b (entrée en vigueur en septembre 2014) a conduit les constructeurs automobiles à choisir entre différentes options pour réduire plus spécifiquement les émission de NOx : - la réduction des NOx « à la source », au niveau du fonctionnement même du moteur, via des technologies de type recyclage des gaz d'échappement dans le moteur, recyclage appelé aussi technologie EGR selon l'acronyme du terme anglais correspondant à « Exhaust Gas Recirculation » haute et basse pression, par exemple ; - la réduction des NOx au niveau de la ligne d'échappement via une technologie de traitement catalytique séquentiel appelée « piège à NOx » ; - la réduction des NOx au niveau de la ligne d'échappement également, via une technologie de traitement continu appelée « réduction catalytique sélective » telle que brièvement décrite plus haut (SCR) ; voire en cumulant plusieurs de ces solutions.

Si ces solutions permettent de satisfaire cette première étape dans l'évolution de la norme (Euro6b), elles ne sont pas forcément capables de satisfaire la seconde étape qui s'annonce encore plus sévère (Euro 6c, entrée en vigueur prévue en septembre 2017), avec des mesures de polluants sur un nouveau cycle de roulage dit « WLTC » (pour « Worldwide Harmonized Light vehicles Test Cycle » en anglais, soit cycle de test harmonisé pour véhicules légers en français), contenant plus de phases transitoires que le cycle d'homologation actuel (dit « MVEG » pour Motor Vehicle Emissions Group en anglais, soit groupe d'émissions pour véhicules motorisés en français), mais aussi des mesures hors cycle (appelées « RDE » pour Real Driving Emission ou émissions en conditions réelles de conduite) devraient être instaurées.

Pour répondre notamment aux risques d'émissions trop élevées de NOx hors cycle, différentes solutions technologiques et architectures peuvent être envisagées. Elles ont leurs avantages et leurs inconvénients. Mais la technologie de traitement des oxydes d'azote la plus efficace est la réduction catalytique sélective (SCR) car elle est efficace dans des plages de température et de débit de gaz plus étendues que celles d'un piège à NOx, l'autre solution de post-traitement.

Par ailleurs, s'ajoutent des contraintes d'implantation du dispositif de post-traitement. En effet, de façon générale, les systèmes catalytiques utilisés sont d'autant plus efficaces que la température des gaz d'échappement qui les traversent est élevée (jusqu'à un certain point). Ils s'amorceront alors d'autant plus vite après le démarrage du moteur que la température des gaz d'échappement augmente rapidement. On a donc intérêt à implanter les dispositifs de post-traitement au plus près du moteur, c'est-à-dire au plus près du collecteur des gaz d'échappement, sous capot, alors même que cet environnement est en général très encombré. Les dispositifs de post-traitement se doivent donc d'être aussi compacts que possible sans nuire à leurs performances.

Dans tout le présent texte, on comprend les termes « amont » et « aval » en fonction de la direction générale d'écoulement des gaz d'échappement dans la ligne d'échappement intégrant les organes de post-traitement, depuis le moteur jusqu'à la canule d'extrémité de la ligne d'échappement.

Il est, par exemple, connu de la demande de brevet WO 2011/089330 un dispositif de post-traitement regroupant dans une même enveloppe plusieurs organes qui vont être successivement traversés par les gaz d'échappement. Il y est proposé, notamment, une série d'organes comprenant d'amont en aval : - un catalyseur d'oxydation, - un injecteur d'agent réducteur de type urée, - un mélangeur dont le rôle est de mélanger intimement les gouttelettes d'urée injectées dans l'enveloppe traversée par les gaz, de façon à se décomposer en ammoniac de manière aussi homogène que possible sur toute la section droite de l'enveloppe, - un organe SCR, - un filtre à particules (appelé FAP par la suite). Il y est également proposé une alternative, consistant à remplacer l'organe SCR et le FAP, par un FAP qui est imprégné d'un catalyseur de réduction des NOx et qui remplit ainsi à la fois la fonction de filtre des suies et de réduction des NOx (appelé SCRF par la suite). D'autres publications de l'état de la technique du domaine post-traitement des gaz d'échappement d'un véhicule automobile sont: US 2011/138776 A1, DE 102011079785 A1, WO 2010/108083 A1, EP 2290204 A1, EP 2590730 A1, JP 2013199913 A, EP 2522822 A1, FR 2955612 A1, DE 102011111590 A1, WO 2012/110720 A1, EP 2500538 A1.

Cependant, un organe dédié SCR comme décrit dans ce document peut ne pas s'amorcer suffisamment tôt pour des raisons de thermique non favorable, notamment dans des conditions de roulage urbain pendant lesquelles les températures dans la ligne d'échappement sont assez basses. Or, c'est justement pendant ce type de roulage urbain que les évolutions de la norme européenne (notamment) vont devenir contraignantes en termes de réduction des émissions de NOx.

En outre, des contraintes supplémentaires apparaissent quand le véhicule automobile est un véhicule dit « lourd » (plus de 1500 kg), qu'il soit un véhicule pour particulier ou de type utilitaire. En effet, dans les mêmes conditions de roulage qu'un véhicule moins lourd, le véhicule « lourd » aura des conditions de température plus élevées à l'échappement à gérer, et des quantités plus importantes à traiter de NOx générés dans le moteur. Pour compenser ces émissions de NOx plus élevées, les quantités d'agent réducteur à injecter dans la ligne d'échappement (par exemple de l'urée se décomposant en ammoniac) devront être plus importantes aussi, puisque ces quantités sont dictées par la stoechiométrie des réactions de NOx par l'ammoniac. Les températures plus élevées des gaz en sortie moteur favorisent par ailleurs la thermo-désorption de l'ammoniac stocké dans les organes SCR (et/ou SCRF), et peuvent en outre contribuer à la dégradation de leurs phases catalytiques actives pouvant induire une diminution de leur capacité de stockage en ammoniac. La conjugaison de températures plus élevées et d'une quantité plus importante d'urée (ou d'ammoniac) à injecter sur la ligne induit un risque accru d'émissions d'ammoniac qui n'aurait pas réagi en bout de ligne d'échappement. Or les fuites d'ammoniac en bout de ligne d'échappement sont malodorantes, et peuvent incommoder, notamment si le véhicule est dans un espace confiné de type parking fermé.

L'invention a alors pour but de concevoir un post-traitement des gaz d'échappement de moteur thermique qui remédie aux inconvénients précités. Elle a notamment pour but d'améliorer les dispositifs existants pour permettre de respecter des normes plus sévères en matière d'émissions de polluants, et plus particulièrement concernant les émissions de NOx dans des conditions de roulage non stabilisées du type roulage urbain et/ou dans une plage de températures élargies, tout en limitant au maximum d'éventuelles fuites d'agent réducteur des NOx non réagi en bout de ligne d'échappement. Avantageusement, elle a aussi pour but d'obtenir un dispositif de post-traitement plus performant et qui reste, en outre, compact.

L'invention a tout d'abord pour objet un dispositif de post-traitement des gaz d'échappement d'un moteur à combustion, qui comporte, d'amont en aval :
- un organe catalyseur d'oxydation (appelé aussi DOC) ou un organe piège à NOx (appelé aussi LNT pour « Lean NOx Trap », acronyme anglais pour piège à NOx pauvre, qui est un organe de stockage et d'élimination des NOx) ;
- une embouchure d'un moyen d'introduction de réducteur ou de précurseur d'un réducteur pour la réduction catalytique sélective des oxydes d'azote SCR ;
- un organe filtre à particules muni d'un revêtement catalyseur de réduction catalytique sélective SCRF des oxydes d'azote NOx ;
- un organe de traitement des fuites d'ammoniac.

Cette architecture de dispositif de post-traitement s'est avérée extrêmement favorable sur plusieurs aspects.

Elle permet d'améliorer les performances du dispositif, notamment en ce qui concerne la réduction des NOx dans les conditions les moins favorables, à savoir, comme évoqué plus haut, dans des conditions de roulage urbain (où la température des gaz d'échappement reste inférieure à un roulage de type route ou autoroute); voire des conditions de type conduite agressive, avec de forts débits de gaz d'échappement à traiter par à-coups.

Et ces résultats très intéressants ont été obtenus par un seul organe SCR intégré dans le filtre à particules, ce qui est particulièrement avantageux, notamment en termes de compacité.

De préférence, le système de dépollution ne comprend que les organes énumérés plus haut (hormis d'éventuels dispositifs supplémentaires ne participant pas directement à la dépollution, mais plutôt à sa mesure, comme des capteurs par exemple).

Il a été également montré que cette architecture permettait de limiter au maximum les rejets/fuites d'ammoniac en bout de ligne d'échappement (ce qu'on désigne également en anglais sous le terme de « NH₃ slip », rejets d'ammoniac provenant soit de l'agent réducteur injecté en amont de l'organe porteur du catalyseur SCR mais n'ayant pas réagi, soit formés lors de la purge du LNT) ceci grâce à l'ajout d'un organe de traitement de ces fuites d'ammoniac. C'est très avantageux, tout particulièrement pour les véhicules lourds qui nécessitent l'injection d'une quantité plus importante d'agent réducteur, avec donc un risque accru de relarguage d'ammoniac en bout de ligne.

Le dispositif selon l'invention va traiter les polluants gazeux et particulaires au fur et à mesure qu'ils traversent les organes de dépollution : ils pénètrent donc d'abord dans la première « brique » constituée, selon un premier mode de réalisation, du catalyseur d'oxydation, où le CO et les HC sont oxydés en eau (H₂O) et en dioxyde de carbone (CO₂). Sortent de cette première brique DOC les produits de l'oxydation du CO et des HC à savoir H₂O et CO₂, ainsi que les oxydes d'azote et les particules. Les NOx résiduels, et les particules rentrent dans la brique SCRF, qui va opérer la réduction des NOx par NH₃ et éliminer les particules en les stockant avant de les brûler lors des régénérations.

Dans l'autre mode de réalisation où le catalyseur d'oxydation DOC est remplacé par un piège à NOx, la présence, en « amont » de l'organe SCR, du piège à NOx, garantit en outre qu'une partie au moins des NOx sera traitée avant même d'entrer dans l'organe de réduction catalytique sélective SCRF. On rappelle que les pièges à NOx sont des systèmes de traitement séquentiel des NOx, avec un stockage en mélange pauvre des NOx (excès en oxygène), puis un déstockage et une réduction de NOx en mélange riche (excès de réducteurs) : - en mélange pauvre, les NOx sont stockés sous forme de nitrates sur des sites actifs (en général sous forme d'oxydes simples ou mixtes comme l'oxyde ou l'aluminate de baryum) ; - en mélange riche, les NOx sont déstockés et réduits en N₂ par les réducteurs (CO, HC et H₂), on parle alors de purge des NOx. Pour assurer cette fonction de piégeage et de réduction des NOx, la phase active du catalyseur comporte généralement des métaux nobles, du type Pt, Pd, assurant l'oxydation du NO en NO₂ et de CO/HC, en jouant ainsi le même rôle qu'un catalyseur d'oxydation classique, du rhodium permettant d'assurer la réduction des NOx en mélange riche, et d'un oxyde simple ou mixte permettant le stockage des NOx en mélange pauvre. Le fonctionnement du piège à NOx nécessite donc des basculements de richesse périodiques, le piège stockant jusqu'à saturation des NOX, pour ensuite être « purgé » périodiquement par un changement de richesse.

De préférence, la longueur de l'organe SCRF est d'au moins 100 mm, notamment comprise entre 100 et 250 mm, de préférence compris entre 120 et 180mm. De préférence, la longueur totale du filtre à particules est d'au plus 250 mm , de préférence compris entre 120 et 180 mm. L'invention préserve donc la compacité de l'ensemble.

De préférence, la longueur totale entre l'entrée de l'organe catalyseur d'oxydation ou du piège à NOx et la sortie du filtre à particules est d'au plus 450 mm, notamment d'au plus 400 mm, de préférence comprise entre 280 et 380 mm.

Enfin, l'excès éventuel en ammoniac est traité par l'organe de traitement ad hoc, à l'extrémité aval du dispositif de post-traitement,

Selon une première variante, l'organe catalyseur d'oxydation DOC ou le piège à NOx, l'embouchure, et l'organe filtre à particules muni d'un revêtement catalyseur de réduction catalytique sélective SCRF des oxydes d'azote NOx sont regroupés dans une enveloppe unique, et l'organe de traitement des fuites d'ammoniac est disposé en dehors de ladite enveloppe unique.

On peut ainsi répartir les différents organes du dispositif de post-traitement, en fonction de l'espace disponible sous capot : ainsi, les organes sauf celui traitant la fuite d'ammoniac restent groupés en sortie moteur sous capot, tandis que l'organe de traitement des fuites en ammoniac peut être déporté plus en aval sur la ligne d'échappement, et se trouver ainsi dans la zone sous caisse du véhicule.

Optionnellement, l'action de l'organe de traitement des fuites d'ammoniac est complétée (ou même remplacée) par un revêtement de traitement des fuites d'ammoniac intégré au filtre à particules, de préférence dans sa partie aval.

Selon une autre variante, lesdits organes et embouchure sont regroupés dans une enveloppe unique.

Cette architecture préserve la compacité de l'ensemble, qui est contenu dans une enveloppe unique, et qui pourra ainsi être avantageusement logé au plus près du collecteur des gaz d'échappement en sortie moteur sur la ligne d'échappement, et notamment sous capot.

De préférence, l'organe de traitement des fuites d'ammoniac est un catalyseur de traitement des fuites d'ammoniac par oxydation de l'ammoniac en NOx puis la réduction desdits NOx en azote, que l'on pourra dans la suite du présent texte désigner sous le terme ASC. « ASC » est l'acronyme anglais du terme « Ammonia Slip Catalyst » ou catalyseur des fuites en ammoniac en français.

Alternativement, l'organe de traitement des fuites d'ammoniac peut être un catalyseur de nettoyage des fuites d'ammoniac par oxydation de l'ammoniac, que l'on pourra dans la suite du présent texte désigner sous le terme CUC. « CUC » est l'acronyme anglais du terme « Clean-Up Catalyst » ou catalyseur de nettoyage pour le traitement des fuites en ammoniac. Ce type de catalyseur oxyde seulement l'ammoniac en le transformant en NOx.

Avantageusement, l'organe catalyseur d'oxydation peut aussi comprendre un matériau adsorbeur d'oxydes d'azote, appelé aussi PNA qui est l'acronyme anglais pour l'expression « Passive NOx Adsorber ».

Le rôle d'un matériau de type PNA est de pouvoir stocker lors des phases froides les oxydes d'azote émis par le moteur, tant que les organes catalysant la réduction des NOx (l'organe SCR et le filtre à particules avec revêtement catalytique SCRF) ne sont pas encore fonctionnels. En effet, il faut attendre 180 à 200°C pour pouvoir injecter le réducteur (urée) dans la ligne d'échappement et former l'ammoniac qui convertira ensuite les NOx. Avec du NH₃ « pré-stocké » dans le revêtement SCR, la conversion des NOx peut s'opérer quelques dizaines de degrés avant (aux environs de 140°C). Le PNA fonctionne en stockant les NOx « à froid » (grâce, notamment, à l'ajout, dans l'imprégnation « classique » d'un catalyseur d'oxydation, d'oxydes simples ou mixtes à caractère basique tels que, par exemple, les oxydes de cérium ou de baryum) avant de les restituer à plus haute température quand la SCR est pleinement opérationnelle (entre 200 et 300°C). Pour assurer un fonctionnement correct du PNA, on prévoit des phases de purges pour nettoyer sa surface qui s'est sulfatée au fur et à mesure du temps, de façon connue.

De préférence, le dispositif de post-traitement selon l'invention comprend un organe mélangeur pour le mélange des gaz d'échappement et du réducteur et/ou la conversion du précurseur en réducteur entre l'embouchure du moyen d'introduction de réducteur ou de précurseur d'un réducteur pour la réduction catalytique sélective des oxydes d'azote et l'organe catalyseur de réduction catalytique sélective des oxydes d'azote intégré au filtre à particules SCRF.

Le dispositif de post-traitement peut aussi comporter un capteur de NOx entre l'organe filtre à particules muni d'un revêtement catalyseur de réduction catalytique sélective SCRF des oxydes d'azote NOx et l'organe de traitement des fuites d'ammoniac, et éventuellement un autre capteur de NOx en amont de l'organe catalyseur d'oxydation DOC / du piège à NOx LNT, et/ou un autre capteur de NOx en aval de l'organe de traitement des fuites d'ammoniac. Le capteur « amont », en amont du catalyseur DOC ou du piège à NOx, peut aussi être remplacé par une modélisation le cas échéant.

De préférence, l'organe catalyseur d'oxydation présente un catalyseur dont la quantité de métaux nobles est ajustée de façon à obtenir en sortie de l'organe des gaz d'échappement dont le ratio NO₂/NOx est égal ou voisin de 0,5 (on comprend par « voisin » une variation de par exemple +/- 15% autour de cette valeur).

De préférence, le catalyseur du filtre à particules est à base de zéolithe(s) échangée(s) au cuivre.

En effet, cette nature de catalyseur est particulièrement adaptée pour imprégner un filtre à particules : - il présente une meilleure résistance thermique qu'un catalyseur à base de zéolithes échangées au Fer (il doit en effet subir sans dégradations d'éventuelles régénérations périodiques du filtre à très haute température), - la combustion des suies par NO₂ (effet appelé « CRT » acronyme anglais pour Continuously Regenerating Trap », soit piège à régénération continue en français) à des températures proches de 250°C à 350°C tend à réduire le ratio NO₂/NOx, les formulations à base de zéolithes échangées au Cuivre (Cu) étant également mieux adaptées car moins sensibles à basse température que celles échangées au fer, - il présente aussi une capacité de stockage de NH₃ plus élevée. Cette dernière caractéristique est particulièrement intéressante, car le faible volume (la faible longueur pour une section inchangée) de l'organe SCR peut être à l'origine de fuites de NH₃. Il est donc très utile que ces fuites d'ammoniac puissent être « captées » correctement dans la brique SCRF en aval de l'organe SCR.

A noter que les zéolithes échangées au Cuivre proposées pour le SCRF et/ou échangées au fer pour le catalyseur de l'organe catalyseur de réduction catalytique SCR sont par exemple à base de zéolithes de type chabazite, ferriérite ou aluminosilicates hydratés (ZMS5), et peuvent contenir également au moins un des oxydes suivants : oxyde de cérium (Ce), de zirconium (Zr), ou encore au moins un des métaux suivants : du niobium (Nb), du tungstène (W), du titane (Ti).

Selon un mode de réalisation, le support de l'organe catalyseur d'oxydation et/ou celui de l'organe piège à NOX, est optionnellement équipé(s) de moyens chauffants, par exemple de type résistances électriques. On réduit ainsi leurs durées de montée en température, et donc le temps à partir duquel ils s'amorcent.

Alternativement, on peut utiliser pour l'un et/ou l'autre de ces organes un matériau de type céramique comme la cordiérite.

Le support du filtre à particules SCRF peut être, par exemple, en carbure de silicium (SiC), en cordiérite ou en titanate d'aluminium.

Avantageusement, le dispositif de post-traitement selon l'invention comprend également un organe mélangeur des gaz d'échappement et du réducteur et/ou du précurseur du réducteur entre l'embouchure du moyen d'introduction de réducteur et/ou de précurseur d'un réducteur pour la réduction catalytique sélective des oxydes d'azote SCR et l'organe catalyseur de réduction catalytique sélective des oxydes d'azote intégré au filtre à particules SCRF.

Ce mélangeur a pour fonction de mélanger aussi bien que possible les gaz d'échappement avec le réducteur ou le précurseur de réducteur, cela étant notamment très utile quand le précurseur est de type liquide, comme de l'urée en phase aqueuse.

L'invention s'applique également à l'injection directe du gaz réducteur, comme de l'ammoniac, qui vient alimenter la ligne d'échappement à partir d'une ou plusieurs cartouches de sel (notamment de type SrCl₂) apte à adsorber l'ammoniac et à le relarguer par activation thermique, de façon connue (technologie appelée communément SCR « solide »), et, dans ce cas-là, le mélangeur est moins nécessaire.

De préférence, le mélangeur est d'un type présentant une longueur de parcours pour des gaz le traversant au moins deux fois supérieure à la longueur qu'il occupe longitudinalement dans l'enveloppe. Le but du mélangeur est d'homogénéiser le mélange entre les gaz d'échappement et le réducteur, et, si l'on introduit un précurseur d'un agent réducteur, de favoriser la décomposition du précurseur de réducteur en agent réducteur. L'emploi d'un mélangeur imposant au gaz d'échappement un parcours relativement long comparativement à la longueur du mélangeur, par exemple d'un type imposant au gaz un cheminement sensiblement hélicoïdal avec impacteur, est particulièrement adapté à l'invention. Il permet, par l'obtention d'une distance de parcours des gaz d'échappement supérieure à ses propres dimensions, l'emploi dans un dispositif compact d'une solution à base d'urée en tant que précurseur d'ammoniac, alors même que la thermolyse de l'urée correspondant à la transformation sous l'action de la chaleur de l'urée en acide isocyanique HNCO et en ammoniac NH₃) dans les gaz d'échappement nécessite un temps non négligeable. Le mélangeur peut être aussi, par exemple, un mélangeur en T utilisant la recirculation des gaz aval catalyseur d'oxydation dans une double enveloppe autour du catalyseur d'oxydation avec une injection sur la face de sortie du catalyseur d'oxydation.

De préférence, l'enveloppe unique est sensiblement en forme de cylindre muni d'un divergent d'entrée et d'un convergent de sortie (en forme de tronçons de cône), d'une longueur totale d'au plus 450 mm, notamment d'au plus 400 mm, de préférence comprise entre 280 et 380 mm, et présente donc une compacité tout-à-fait compatible avec une implantation dans un sous-capot moteur d'un véhicule automobile.

De préférence, le moyen d'introduction de l'agent réducteur est un injecteur du type à actionneur par solénoïde ou piézoélectrique ou mécanique ou hydropneumatique.

Le conduit entre le collecteur d'échappement et le dispositif selon l'invention peut en outre comporter une ou plusieurs turbines de turbocompresseur dans le cadre d'un moteur suralimenté, et, en particulier, le dispositif selon l'invention peut être raccordé directement au carter d'un turbocompresseur, à la sortie d'une turbine.

L'invention a également pour objet une ligne d'échappement qui comporte le dispositif de post-traitement décrit précédemment.

L'invention a également pour objet, dans un premier mode de réalisation, un véhicule automobile délimitant un espace sous capot, qui contient ce qu'on désigne usuellement par le terme compartiment moteur, et un espace sous caisse, et comportant un moteur thermique raccordé à la ligne d'échappement précédente, tel que le moteur et le dispositif de post-traitement de la ligne d'échappement sont disposés dans l'espace sous capot. On a ainsi tous les organes de dépollution groupés, de façon compacte, au plus près du moteur.

L'invention a également pour objet, dans un deuxième mode de réalisation, un véhicule automobile délimitant un espace sous capot et un espace sous caisse, et comportant un moteur thermique raccordé à la ligne d'échappement précédente, tel que le moteur, l'organe catalyseur d'oxydation DOC ou le piège à NOx LNT, l'embouchure, et l'organe filtre à particules muni d'un revêtement catalyseur de réduction catalytique sélective SCRF des oxydes d'azote NOx du dispositif de post-traitement de la ligne d'échappement sont disposés dans l'espace sous capot, et tel que l'organe de traitement des fuites d'ammoniac est disposé dans l'espace sous caisse. On regroupe ainsi au plus près du moteur les organes de dépollution ayant besoin d'une température de gaz d'échappement élevée et on éloigne du moteur l'organe de traitement des fuites d'ammoniac pour le préserver de thermiques trop sévères qui pourraient engendrer une dégradation de son efficacité.

L'invention a également pour objet un procédé de mise en oeuvre d'un véhicule automobile comportant un moteur thermique raccordé à la ligne d'échappement telle que décrite plus haut, le traitement des NOx étant assuré par deux systèmes, d'une part l'organe piège à NOx, et d'autre part l'ensemble SCR/ SCRF ,et, selon la disponibilité de l'agent réducteur sur véhicule, on adapte la pondération de traitement des NOx entre l'un ou l'autre des systèmes.

Il est à noter, que, parmi les différentes variantes de la présente invention, la plus intéressante en termes de réduction d'émission des NOx et de gestion du NH₃ s'est avérée comporter la série d'organes suivants, présentée selon une séquence d'amont vers aval :
(Organe piège à NOx/mélangeur de l'agent réducteur/ organe SCRF filtre à particules à revêtement SCR/organe de traitement des fuites d'ammoniac de type ASC) ; l'ensemble de ces organes étant regroupé dans une enveloppe commune dans le compartiment moteur, notamment en sortie du turbocompresseur quand il est présent.

L'invention est décrite plus en détail ci-après en référence aux figures relatives à un mode de réalisation non limitatif se rapportant à un dispositif de post-traitement des gaz d'échappement d'un moteur diesel :
- la figure 1 représente schématiquement un moteur et sa ligne d'échappement d'un véhicule automobile comportant le dispositif de post-traitement selon un exemple 1 de l'invention ;
- la figure 2 est un graphe représentant l'évolution de la capacité de stockage d'ammoniac dans l'organe SCRF en fonction de la température ;
- la figure 3 représente un schéma de fonctionnement du catalyseur de traitement des fuites en ammoniac du dispositif de post-traitement de la figure 1.

Les références reprises d'une figure à l'autre désignent des mêmes composants, et les différents composants représentés ne sont pas nécessairement à l'échelle. Les figures restent très schématiques pour en faciliter la lecture.

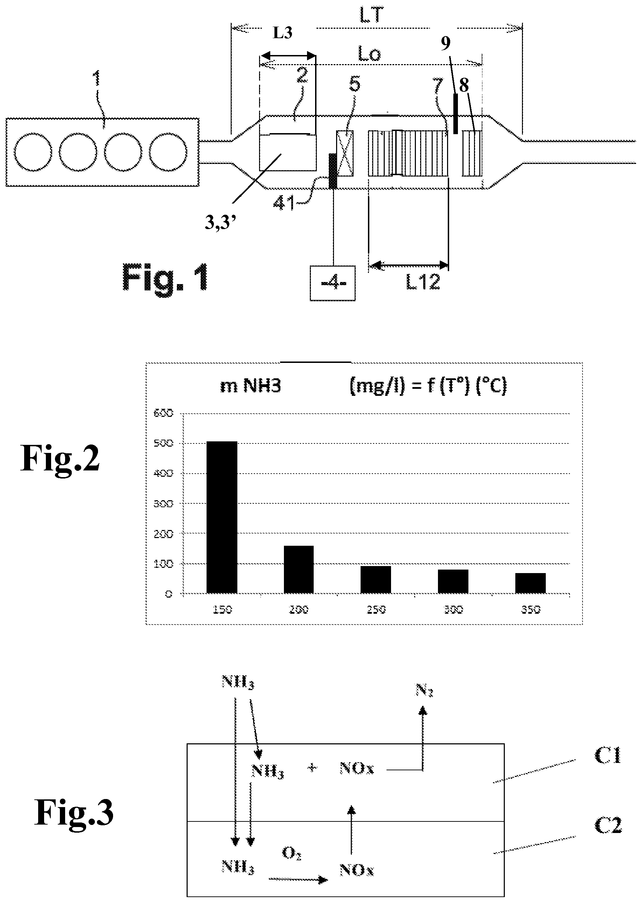

Dans l'invention, et tel que représenté sur la figure 1, on propose un dispositif de traitement des gaz d'échappement d'un moteur 1 selon un exemple 1. Ce dispositif est intégré à la ligne d'échappement raccordée au collecteur (non représenté) des gaz d'échappement du moteur 1. Il comporte, dans une même enveloppe 2 (que l'on peut également désigner par le terme anglophone de « canning ») et, selon le sens d'écoulement des gaz d'échappement (d'amont en aval donc) un organe catalyseur d'oxydation 3 ou un piège à NOx 3' selon l'un ou l'autre des modes de réalisation de l'invention, une embouchure 41 d'un moyen d'introduction 4 de réducteur (ou d'un précurseur d'agent réducteur), un mélangeur 5, un filtre à particules SCRF muni d'un revêtement d'imprégnation SCR 7 et un catalyseur de traitement des fuites d'ammoniac 8. On prévoit également au moins un capteur de NOx 9 entre le filtre 7 et le catalyseur de traitement d'ammoniac 8.

L'enveloppe 2 est située au plus près du collecteur des gaz d'échappement, notamment à environ 300 mm de sa sortie (par exemple d'au plus 500 mm de sa sortie). Elle est disposée, dans le véhicule automobile, dans l'espace sous-capot accueillant le moteur 1.

Les données dimensionnelles/géométriques sont les suivantes : L'enveloppe 2 est de section cylindrique et permet de loger les différents organes 3,7 et 8, également de formes extérieures sensiblement cylindriques et de sections d'environ 175 cm² -(ou 150 mm de diamètre). Les extrémités de l'enveloppe 2 sont en forme de tronçons de cône, afin d'en permettre le raccordement au reste de la ligne d'échappement de section nettement plus petite. La longueur L12 du filtre à particules 7 est compris entre 5 et 8 pouces, soit entre 127 et 203,6, mm, par exemple ici de 6 pouces, soit 152,7 mm.

La longueur L3 de l'organe catalyseur d'oxydation 3 ou piège à NOx 3' est d'environ 70 mm.

La longueur L0 depuis la face amont du catalyseur d'oxydation 3 ou du piège à NOx 3' jusqu'à la face aval de l'organe 8 est comprise entre 280 et 380 mm. Cette longueur correspond substantiellement à la longueur de la portion cylindrique de l'enveloppe 2. La longueur totale LT de l'enveloppe 2, incluant les deux cônes de raccordement est donc un peu supérieure.

Selon un premier mode de réalisation (exemple 1), la première « brique » de ce dispositif de post-traitement est un catalyseur d'oxydation 3, qui oxyde les espèces réductrices que sont le monoxyde de carbone (CO) et les hydrocarbures imbrûlés (HC). Les réactions qu'il favorise sont les suivantes :

CO + ½ O₂ → CO₂ (R1)

Réaction d'oxydation du monoxyde de carbone

CₓH_{y} + (x+y/4) O₂ → x CO₂ + (y/2) H₂O (R2)

Réaction d'oxydation des hydrocarbures imbrûlés

Il est constitué d'un support en nid d'abeille de type cordiérite sur lequel est déposée une phase active catalytique (« washcoat ») contenant des métaux précieux pour catalyser les réactions d'oxydation de CO, HC et NO. Cette phase comporte également des oxydes tels que l'alumine dopée par différents stabilisants (lanthane, cérium, zirconium, titane, silicium, etc...). Sur ces oxydes, des métaux précieux (platine, palladium) sont déposés afin de catalyser les réactions d'oxydation dès les basses températures. Des composés acides tels que des zéolithes sont aussi ajoutés. Leur aptitude au stockage des hydrocarbures à basse température et leur déstockage à haute température permet d'améliorer le traitement des HC lors des phases froides. On peut ajouter à ces fonctions (oxydation du monoxyde de carbone et des hydrocarbures imbrûlés et stockage de ces derniers à basse température) une fonction de stockage des oxydes d'azote, NOx également à basse température. Cette fonction de stockage est assurée par l'introduction de matériaux de type oxydes simples ou mixtes à caractère basique tels que par exemple, les oxydes de cérium ou de baryum entre autres.

On ne décrit pas en détails ici l'injecteur 4 d'urée, ni le mélangeur 5 (appelé aussi boîte de mélange), déjà décrits et connus, notamment de la demande de brevet WO 2011/089330 précitée. On rappelle juste que la boîte de mélange 5 alimentée par un injecteur 4, lui-même alimenté par un module jauge-pompe qui puise de l'urée en solution aqueuse dans un réservoir d'environ 20 litres (il peut en contenir moins car le volume d'urée embarquée dépend de la stratégie de consommation adoptée), assure un mélange entre les gouttes d'urée et les gaz d'échappement suffisant pour que la réaction (R3) de thermolyse se fasse totalement et que la réaction (R4) d'hydrolyse se fasse en partie . Les réactions (R3) et (R4) sont explicitées plus loin.

Le filtre à particules SCRF 7 traite les oxydes d'azote. Le principe de la réduction de ces NOx par SCR (par le revêtement du filtre à particules 7) peut se décomposer en deux grandes étapes :
1 > Formation du réducteur (NH₃) à partir d'Adblue ® qui est un mélange d'urée à 32,5% et d'eau

   (NH₂)₂CO → NH₃ + HNCO (R3)

   thermolyse de l'urée

   HNCO + H₂O → NH₃ + CO₂ (R4)

   hydrolyse de l'acide isocyanique
   La décomposition de l'urée, injectée par l'injecteur 4 dans la boîte de mélange 5, se fait en deux étapes : une première appelée « thermolyse » qui forme une molécule de NH₃ et une molécule d'acide isocyanique (HNCO) et une seconde qui forme la seconde molécule de NH₃ à partir de l'hydrolyse de l'acide isocyanique. Ces deux étapes, mais surtout la vaporisation de l'eau contenue dans le mélange, nécessitent des températures d'au moins 180 à 200°C, d'où l'intérêt que l'injecteur et la boîte de mélange gaz-liquide (urée) soient proches de la sortie du moteur 1. Cette étape permet de former le réducteur indispensable au fonctionnement de la réduction SCR.
2 > Réduction catalytique sélective des NOx par NH₃ par le revêtement SCR de l'organe 7:

   4 NO + O₂ + 4 NH₃ → 4 N₂ + 6 H₂O (R5)

   SCR standard

   NO + NO₂ + 2 NH₃ → 2 N₂ + 3 H₂O (R6)

   SCR à cinétique rapide

   6 NO₂ + 8 NH₃ → 7 N₂ + 12 H₂O (R7)

   SCR à cinétique lente

Plusieurs réactions peuvent avoir lieu (R5 à R7), mais la conversion optimale et recherchée des NOx est obtenue grâce à la réaction (R6) dont la cinétique est la plus rapide mais dont la stoechiométrie impose un ratio NO₂/NOx proche de 0,5, surtout aux basses températures (c'est-à-dire d'au plus 250°C).

Le catalyseur SCR du filtre à particules 7 est à base de zéolithes au cuivre, comme la chabazite, β, la cuivre-ferriérite, la ZSM5... C'est le meilleur choix, notamment pour que le catalyseur du filtre à particules reste efficace même à très haute température (qu'il résiste aux régénérations du filtre notamment). Le support poreux du filtre 7 est plutôt en carbure de silicium SiC.

On obtient avec l'architecture de cet exemple 1 selon l'invention des conditions thermiques favorables, ce qui se traduit par une grande efficacité dans le traitement des NOx : on a mesuré sur un cycle WLTC en sortie de ligne d'échappement un niveau de 40mg de NOx/km pour une norme à 80mg/km. On obtient donc avec l'invention un niveau très faible de rejets de NOx à l'atmosphère, tout en préservant la compacité de l'ensemble du dispositif de post-traitement.

Revenons maintenant au fonctionnement du catalyseur de traitement des fuites en ammoniac 8. Dans l'exemple 1 discuté, on a choisi un organe catalyseur 8 de type ASC, dont le principe de fonctionnement et la structure sont illustrés à la figure 3. Il présente deux couches d'imprégnation : une couche C2 qui assure la fonction d'oxydation du NH₃ en NOx et une couche C1 qui assure la fonction de réduction des NOx par NH₃.

La composition de l'organe ASC 8 est ainsi la suivante : la couche supérieure C1 (celle qui est en contact avec les gaz d'échappement) correspond à un revêtement catalytique de type SCR et la couche inférieure C2 (celle qui est en contact avec les parois du substrat contient des métaux précieux (de préférence du palladium en très faible quantité, entre 0,5 et 5 g/ft3, idéalement de 1 à 2) déposés sur alumine. Le fonctionnement de l'organe 8 ASC est le suivant : l'ammoniac résiduel pénètre dans la couche C1 et se stocke dans cette couche en partie. Le reste de l'ammoniac traverse cette couche C1 et pénètre dans la couche C2 dont les métaux précieux (Pd) favorisent l'oxydation de l'ammoniac NH₃ en NOx. Lorsque les NOx ressortent du revêtement catalytique SCR de la couche C2, ils repassent nécessairement par la couche C1 où est stocké le NH₃. La réaction de réduction des NOx par le NH₃ peut alors avoir lieu. Les NOx sont ainsi convertis en azote (N₂) avant de ressortir de ce catalyseur 8.

En sortie de la ligne d'échappement, on n'a donc pas, ou quasiment pas de risque d'émissions d'ammoniac dans l'atmosphère grâce à ce catalyseur 8, même si le moteur équipe un véhicule de type utilitaire avec un besoin fort en traitement des NOx, comme expliqué ci-dessous :

Si on reprend l'ensemble des réactions R3 à R7 explicitées plus haut, on comprend ainsi qu'il existe une phase de stockage du NH₃ dans le revêtement catalytique du filtre SCRF 7, -préalablement à la conversion des NOx en N₂ grâce à ce même NH₃ généré par la décomposition de l'urée. Ce stockage d'ammoniac représenté par un critère appelé « capacité de stockage de NH₃ » évolue suivant différents paramètres comme les caractéristiques intrinsèques du revêtement catalytique, son état (neuf ou vieilli), la température intra-catalyseur, voire, dans une moindre mesure, le temps de séjour des gaz dans le catalyseur...

Il existe, ainsi, des revêtements catalytiques SCR qui présentent des capacités de stockage de NH₃ plus ou moins grande : la capacité de stockage d'ammoniac des revêtements SCR à base de Cuivre est, par exemple, supérieure à celles des revêtements à base de Fer.

Pour un revêtement catalytique SCR donné, son état de vieillissement va intervenir : plus le revêtement sera vieilli, plus il perdra une partie de sa capacité de stockage. Pour un revêtement catalytique SCR et un état de vieillissement donné, la capacité de stockage va évoluer en fonction de la température intra-SCRF, comme cela est montré en figure 2. Cette figure représente un graphe, avec, en abscisse, la température en degrés C, et, en ordonnée, la masse de NH₃ stocké par un revêtement SCR en milligrammes/litres.. On observe, à la lecture de ce graphe, une baisse de la capacité de stockage avec la température, baisse liée au phénomène de thermo-désorption de l'ammoniac. On peut enfin noter que l'oxydation du NH₃ en NOx se produit à partir de 450 à 500°C environ.

On comprend ainsi qu'il existe des phases où des émissions de NH₃ à la canule (c'est-à-dire à l'extrémité aval de la ligne d'échappement) peuvent apparaître : - le NH₃ peut se déstocker du revêtement SCR du filtre 7, du fait des conditions thermiques rencontrées, sans réagir avec les NOx ; - le NH₃ peut ne plus se stocker pour des raisons de saturation des sites de stockage (notamment si le revêtement SCR qui a vieilli thermiquement a perdu de sa capacité de stockage) ; - ou si les quantités de NH₃ sont trop importantes par rapport à sa capacité de stockage.

Les systèmes de dépollution sont généralement contrôlés en efficacité par des outils de diagnostic embarqués dans les véhicules, connus sous l'acronyme anglais de « OBD » pour « On Board Diagnosis ») tout au long de la vie du véhicule. Aussi existe-t-il différentes procédures qui permettent de vérifier si les systèmes de dépollution sont en état de marche : - en sous-injectant de l'urée et donc de l'ammoniac, le système doit être capable de détecter une moindre efficacité de traitement des NOx ; - ou, au contraire, en sur-injectant de l'urée et en créant spécifiquement des émissions de NH₃ en aval du filtre SCRF 7, le système doit être capable de les détecter. Dans ce dernier cas, le diagnostic du système est réalisé grâce au capteur de NOx 9 situé en aval du filtre SCRF 7. La présente invention élimine ces fuites d'ammoniac en aval, grâce à l'ajout de l'organe 8 du traitement de l'ammoniac, et donc à la canule, à l'extrémité de la ligne d'échappement du véhicule.

Plus le véhicule est lourd, plus ces phases à risques (quantités injectées d'urée très importantes pour « répondre » aux quantités de NOx produites par le moteur, capacité de stockage de NH₃ réduite du fait des conditions thermiques élevées, etc..) peuvent se produire et être responsables d'émissions de NH₃ à la canule, même avec une ligne de dépollution aussi efficace que celle citée précédemment.

Alternativement à l'organe de traitement de l'ammoniac 8 de type ASC, on peut utiliser un catalyseur de type CUC, qui présente une fonction unique d'oxydation du NH₃ en NOx, grâce à un revêtement catalytique contenant du platine (la charge en Pt n'étant pas nécessairement importante : 10 à 20g/**ft³** pouvant suffire). C'est une solution simple mais moins performante que la précédente, puisqu'elle va recréer des NOx en bout de ligne d'échappement. Il est alors nécessaire de veiller à ce que la somme des NOx non traités par le filtre SCRF 7 et des émissions résiduelles de NH₃ se transformant en NOx par l'action d'un tel catalyseur de type CUC ne dépasse pas la limite d'émission NOx réglementaire.

Selon une autre variante non représentée, on positionne le catalyseur de traitement des fuites d'ammoniac 8 plus en aval sur la ligne d'échappement : il n'est plus dans l'enveloppe commune 2, au plus près du moteur dans l'espace sous capot, mais en aval dans l'espace sous caisse, dans une enveloppe dédiée plus loin sur la ligne. Cette implantation est intéressante pour éviter un vieillissement thermique prématuré du catalyseur de traitement des fuites d'ammoniac 8.

Selon un autre mode de réalisation, (exemple 2), le catalyseur d'oxydation est remplacé par un piège à NOx 3'. Il est constitué d'un support en nid d'abeille de type cordiérite oui sur lequel est déposée une phase catalytique comprenant des éléments favorisant le stockage tels que, mais pas uniquement, des oxydes simples ou mixtes de baryum et/ou de magnésium.

En mélange pauvre, le piège à NOx va stocker les NOx en réalisant deux réactions en série :

NO + 1/2 O₂ ---) NO₂

2 NO₂ + « Ba » ---) Ba(NO₃)₂

En mélange riche, le piège à NOx déstocke et traite une partie au moins des NOx en réalisant deux autres réactions en série :

Ba(NO₃)₂ ---) NOx + « Ba »

NOx + « réducteurs» (HC, CO..) ---) N₂

Les autres organes, en aval du piège à NOx sont les mêmes qu'à l'exemple 1 précédent.

En conclusion, grâce au dispositif de post-traitement de l'invention, il est non seulement possible de répondre aux exigences croissantes des futures normes, notamment en ce qui concerne les niveaux d'émission de NOx, mais il est également possible de réduire la consommation de carburant via la conception et/ou le contrôle commande du moteur thermique, le compromis CO₂/NOx vers des stratégies « bas CO₂ », tout en réduisant les rejets d'ammoniac en bout de ligne d'échappement.

## Revendications

1. Véhicule automobile délimitant un espace sous capot et un espace sous caisse, et comportant un moteur thermique raccordé à la ligne d'échappement d'un moteur à combustion (1), ladite ligne d'échappement comportant un dispositif de post-traitement des gaz d'échappement, **caractérisé en ce que** ledit dispositif de post-traitement comporte, d'amont en aval :
• un organe catalyseur d'oxydation DOC (3) ou un organe piège à NOx LNT (3') ;
• une embouchure (41) d'un moyen d'introduction (4) de réducteur ou de précurseur d'un réducteur pour la réduction catalytique sélective des oxydes d'azote SCR ;
• un organe filtre à particules (7) muni d'un revêtement catalyseur de réduction catalytique sélective SCRF des oxydes d'azote NOₓ ;
• un organe de traitement des fuites d'ammoniac (8) ;
**en ce que** le moteur, l'organe catalyseur d'oxydation DOC (3) ou le piège à NOX LNT (3'), l'embouchure (41), et l'organe filtre à particules (7) muni d'un revêtement catalyseur de réduction catalytique sélective SCRF des oxydes d'azote NOx du dispositif de post-traitement de la ligne d'échappement sont disposés dans l'espace sous capot, et **en ce que** l'organe de traitement des fuites d'ammoniac (8) est disposé dans l'espace sous caisse.

2. Véhicule automobile selon la revendication précédente, **caractérisé en ce que** le dispositif de post-traitement ne comprend que lesdits organes et ladite embouchure.

3. Véhicule automobile selon la revendication précédente 1 ou 2, **caractérisé en ce que** l'organe catalyseur d'oxydation DOC (3) ou l'organe piège à NOx LNT (3'), l'embouchure (41), et l'organe filtre à particules (7) muni d'un revêtement catalyseur de réduction catalytique sélective SCRF des oxydes d'azote NOx sont regroupés dans une enveloppe (2) unique, et **en ce que** l'organe de traitement des fuites d'ammoniac (8) est disposé en dehors de ladite enveloppe unique.

4. Véhicule automobile selon l'une des revendications précédentes, **caractérisé en ce que** l'action de l'organe de traitement des fuites d'ammoniac (8) est complétée par un revêtement de traitement des fuites d'ammoniac intégré au filtre à particules (7), de préférence dans sa partie aval.

5. Véhicule automobile selon l'une des revendications précédentes, **caractérisé en ce que** l'organe de traitement des fuites d'ammoniac (8) est un catalyseur de traitement des fuites d'ammoniac ASC par oxydation de l'ammoniac en NOx puis la réduction desdits NOx en azote.

6. Véhicule automobile selon l'une des revendications 1 à 4, **caractérisé en ce que** l'organe de traitement des fuites d'ammoniac (8) est un catalyseur de nettoyage des fuites d'ammoniac CUC par oxydation de l'ammoniac en NOx.

7. Véhicule automobile selon l'une des revendications précédentes, **caractérisé en ce que** l'organe catalyseur d'oxydation (3) comprend un matériau adsorbeur d'oxydes d'azote PNA.

8. Procédé de mise en oeuvre d'un véhicule automobile selon l'une des revendications précédentes, **caractérisé en ce que** le traitement des NOx est assuré par deux systèmes, d'une part l'organe piège à NOx (3'), et d'autre part l'organe filtre à particules (7) et **en ce que**, selon la disponibilité de l'agent réducteur sur véhicule, on adapte la pondération de traitement des NOx entre l'un ou l'autre des systèmes.

## Patentansprüche

1. Kraftfahrzeug, das einen Raum unter der Motorhaube und einen Raum unter der Karosserie abgrenzt und eine Brennkraftmaschine umfasst, die an den Abgasstrang eines Verbrennungsmotors (1) angeschlossen ist, wobei der Abgasstrang eine Nachbehandlungsvorrichtung der Abgase umfasst, **dadurch gekennzeichnet, dass** die Nachbehandlungsvorrichtung von stromaufwärts nach stromabwärts Folgendes umfasst:
• ein Oxidationskatalysatorelement DOC (3) und ein NOx-Fallenelement LNT (3');
• eine Mündung (41) eines Mittels zum Einführen (4) von Reduktionsmittel oder eines Vorläufers eines Reduktionsmittels für die selektive katalytische Reduktion der Stickstoffoxide SCR;
• ein Partikelfilterelement (7), das mit einer Katalysatorbeschichtung zur selektiven katalytischen Reduktion SCRF der Stickstoffoxide NOₓ versehen ist;
• ein Behandlungselement der Ammoniaklecks (8);
dass der Motor, das Oxidationskatalysatorelement DOC (3) oder die NOx-Falle LNT (3'), die Mündung (41) und das Partikelfilterelement (7), das mit einer Katalysatorbeschichtung zur selektiven katalytischen Reduktion SCRF der Stickstoffoxide NOx der Nachbehandlungsvorrichtung des Abgasstrangs versehen ist, in dem Raum unter der Motorhaube angeordnet sind, und dass das Behandlungselement der Ammoniaklecks (8) in dem Raum unter der Karosserie angeordnet ist.

2. Kraftfahrzeug nach dem vorhergehenden Anspruch, **dadurch gekennzeichnet, dass** die Nachbehandlungsvorrichtung nur die Elemente und die Mündung umfasst.

3. Kraftfahrzeug nach dem vorstehenden Anspruch 1 oder 2, **dadurch gekennzeichnet, dass** das Oxidationskatalysatorelement DOC (3) oder das NOx-Fallenelement LNT (3'), die Mündung (41) und das Partikelfilterelement (7), das mit einer Katalysatorbeschichtung zur selektiven katalytischen Reduktion SCRF der Stickstoffoxide NOx versehen ist, in einem einzigen Mantel (2) gruppiert sind, und dass das Behandlungselement der Ammoniaklecks (8) außerhalb des einzigen Mantels angeordnet ist.

4. Kraftfahrzeug nach einem der vorhergehenden Ansprüche, **dadurch gekennzeichnet, dass** die Aktion des Behandlungseinheit der Ammoniaklecks (8) durch eine Beschichtung zur Behandlung der Ammoniaklecks, die in das Partikelfilter (7) integriert ist, bevorzugt in seinem stromabwärtigen Teil, ergänzt ist.

5. Kraftfahrzeug nach einem der vorhergehenden Ansprüche, **dadurch gekennzeichnet, dass** das Behandlungselement der Ammoniaklecks (8) ein Behandlungskatalysator der Ammoniaklecks ASC durch Oxidation des Ammoniaks in NOx und dann Reduktion der NOx in Stickstoff ist.

6. Kraftfahrzeug nach einem der Ansprüche 1 bis 4, **dadurch gekennzeichnet, dass** das Behandlungselement der Ammoniaklecks (8) ein Katalysator zum Reinigen der Ammoniaklecks CUC durch Oxidation des Ammoniaks in NOx ist.

7. Kraftfahrzeug nach einem der vorhergehenden Ansprüche, **dadurch gekennzeichnet, dass** das Oxidationskatalysatorelement (3) ein Stickstoffoxide adsorbierendes Material PNA umfasst.

8. Verfahren zur Umsetzung eines Kraftfahrzeugs nach einem der vorstehenden Ansprüche, **dadurch gekennzeichnet, dass** die Behandlung der NOx von zwei Systemen sichergestellt ist, einerseits von dem NOx-Fallenelement (3'), und andererseits von dem Partikelfilterelement (7), und dass gemäß der Verfügbarkeit des Reduktionsmittels auf dem Fahrzeug die Behandlungsgewichtung der NOx in das eine oder das andere der Systeme eintritt.

## Claims

1. A motor vehicle delimiting an under-bonnet space and an under-body space, and comprising a heat engine connected to the exhaust line of an internal combustion engine (1), said exhaust line comprising an exhaust gas aftertreatment device, **characterized in that** said aftertreatment device comprises, from upstream to downstream:
• an oxidation catalyst member DOC (3) or an LNT NOx trap member (3');
• an outlet (41) of a means (4) for introducing a reducing agent or reducing agent precursor for the selective catalytic reduction SCR of nitrogen oxides;
• a particle filter member (7) provided with a catalyst coating for the selective catalytic reduction SCRF of nitrogen oxides NOₓ;
• a member (8) for treating ammonia leaks;
**in that** the engine, the oxidation catalyst member DOC (3) or the LNT NOX trap (3'), the outlet (41), and the particle filter member (7) provided with a catalyst coating for the selective catalytic reduction SCRF of nitrogen oxides NOₓ of the aftertreatment device of the exhaust line are arranged in the under-bonnet space, and **in that** the member (8) for treating ammonia leaks is arranged in the under-body space.

2. The motor vehicle according to the preceding claim, **characterized in that** the aftertreatment device only includes said members and said outlet.

3. The motor vehicle according to the preceding claim 1 or 2, **characterized in that** the oxidation catalyst member DOC (3) or the LNT NOx trap member (3'), the outlet (41), and the particle filter member (7) provided with a catalyst coating for the selective catalytic reduction SCRF of nitrogen oxides NOx are grouped together in a single casing (2), and **in that** the member (8) for treating ammonia leaks is arranged outside said single casing.

4. The motor vehicle according to one of the preceding claims, **characterized in that** the action of the member (8) for treating ammonia leaks is supplemented by a coating for treating ammonia leaks integrated to the particle filter (7), preferably in its downstream portion.

5. The motor vehicle according to one of the preceding claims, **characterized in that** the member (8) for treating ammonia leaks is a catalyst for treating ammonia leaks ASC by oxidation of ammonia into NOx, then the reduction of said NOx into nitrogen.

6. The motor vehicle according to one of claims 1 to 4, **characterized in that** the member (8) for treating ammonia leaks is a catalyst for cleaning ammonia leaks CUC by oxidation of ammonia into NOx.

7. The motor vehicle according to one of the preceding claims, **characterized in that** the oxidation catalyst member (3) includes an adsorber material of nitrogen oxides PNA.

8. A method for implementing a motor vehicle according to one of the preceding claims, **characterized in that** the treatment of the NOx is ensured by two systems, on the one hand the NOx trap member (3'), and on the other hand the particle filter member (7) and **in that**, according to the availability of the reducing agent on the vehicle, the weighting of treatment of the NOx is adapted between one or other of the systems.
